# EUROPÄISCHE PATENTANMELDUNG

(11) **EP 4 163 577 A1**
(43) Veröffentlichungstag der Anmeldung: **12.04.2023**
(21) Anmeldenummer: 21201728.9
(22) Anmeldetag: 08.10.2021
(51) Int. Cl.: F27B 9/24, C21D 1/673, F27D 3/02

(54) **OFENROLLE, ROLLENHERDOFEN, VERWENDUNG DER OFENROLLE SOWIE VERFAHREN ZUR HERSTELLUNG EINES WARMGEFORMTEN UND WENIGSTENS ABSCHNITTSWEISE PRESSGEHÄRTETEN FAHRZEUGBAUTEILS**

(71) Anmelder: Benteler Maschinenbau GmbH, 33602 Bielefeld (DE)
(72) Erfinder: Kout, Radovan, 46014 Liberec (CZ); Nemec, Petr, 40801 Rumburg (CZ); Dvorak, Borek, 46605 Jablonec nad Nisou - Rynovice (CZ); Sida, Daniel, 51301 Semily (CZ)
(74) Vertreter: Ksoll, Peter

(57) **Zusammenfassung**

Eine Ofenrolle 1 für einen Rollenherdofen besitzt einen hohlzylindrischen keramischen Rollenkörper 2 mit einer äußeren oxidischen Beschichtung 6. Der Rollenkörper 2 weist äußere in Längsrichtung des Rollenkörpers 2 geradlinig verlaufende Längsrippen 7 und Längsnuten 8 auf. Durch die Ausgestaltung wird die Kontaktfläche zwischen dem Rollenkörper 2 und den zu transportierenden Platinen verringert. Die Ofenrollen 1 sind besonders geeignet für die Verwendung in Rollenöfen in Warmformlinien für das Presshärten von AlSi-beschichteten Stahlplatinen.

## Beschreibung

Die Erfindung betrifft eine Ofenrolle gemäß den Merkmalen im Oberbegriff von Anspruch 1, einen Rollenherdofen mit einer solchen Ofenrolle und die Verwendung einer Ofenrolle in einem Rollenherdofen einer Warmformlinie für das Presshärten sowie ein Verfahren zur Herstellung eines warmgeformten und wenigstens abschnittsweise pressgehärteten Fahrzeugbauteils.

Bei der kontinuierlichen Wärmebehandlung von Blech werden in verketteten Produktionsprozessen Durchlauföfen eingesetzt. Bei Presshärteprozessen ist der Rollenherdofen der überwiegend zum Einsatz gelangende Wärmebehandlungsanlagentyp. Ein Rollenherdofen eignet sich sowohl für den indirekten als auch für den direkten Presshärteprozess und zeichnet sich durch eine hohe Prozesssicherheit und Anlagenverfügbarkeit aus. Neben dem Ofenraum und der Heiztechnik ist eine wesentliche Komponente des Rollenherdofens, der sogenannte Rollengang, auch Rollenbahn genannt. Je nach Ofenlänge, Rollendurchmesser und -abstand bilden eine Vielzahl von rotierbaren Ofenrollen eine kontinuierliche Transportbahn.

Ofenrollen stehen in keramischer oder metallischer Ausführung zur Verfügung. Gängig sind Ofenrollen aus Stahl, Siliziumkarbid (SiC), Quarz oder Mullit. Des Weiteren kommen plasmabeschichtete Stahlrollen zum Einsatz. Hierbei wird eine Stahlrolle mit Keramik, beispielsweise Aluminiumoxid oder Zinkoxid, beschichtet. Zum Stand der Technik zählen weiterhin Ofenrollen mit Rollenkörper, die mit einer oxidischen Tragflächenbeschichtung versehen sind.

Eine solche Rolle ist in der DE 10 2011 051 270 A1 offenbart.

Weiterhin zählt durch die DE 10 2017 114 165 A1 eine Ofenrolle für einen Rollenherdofen zum Stand der Technik. Der Rollenkörper weist eine Beschichtung auf der Oberfläche auf und kann aus einem Keramikmaterial der Gruppe Mullit, Aluminia, SiC oder auch deren Mischungen bestehen.

Aus der EP 2 703 759 A1 gehen Ofenrollen hervor, die bei Wärmebehandlungsanlagen für Aluminium-Silizium-(AISi-)beschichtete Stahlbleche zum Einsatz kommen sollen. Die Ofenrollen weisen einen Kern mit einer Beschichtung an der äußeren Oberfläche auf. Der Kern kann aus einem metallischen oder keramischen Werkstoff bestehen.

In der DE 10 2016 124 649 A1 ist eine Ofenrolle offenbart mit einer gewellten Außenoberfläche, wobei die gewellte Außenoberfläche über die Längserstreckung der Ofenrolle eine Vielzahl von Wellenbergen und Wellentälern aufweist. Diese Außenoberfläche bezweckt einen reduzierten Verschleiß bei Querzentrierung bzw. Quertransport von erwärmten oder zu erwärmenden Metallteilen direkt innerhalb der Rollenbahnebene.

Das Presshärten von Mangan-Bor-legierten Stählen zu hochfesten Karosseriebauteilen ist in der Automobilfertigung etabliert. Solche hochfesten Karosseriebauteile verbessern die Insassensicherheit und reduzieren das Bauteilund damit das Gesamtgewicht eines Fahrzeugs. Beim Presshärten, auch Formhärten genannt, wird ein Stahlblech aus einem Mangan-Bor-Stahl auf eine Temperatur oberhalb der spezifischen Austenitisierungstemperatur des Werkstoffs erwärmt. Dies erfolgt in einem Rollenherdofen. Unmittelbar im Anschluss wird das erwärmte Stahlblech in ein Pressenwerkzeug eingelegt und zum Formbauteil warmumgeformt, wobei es während der Formgebung abkühlt. Im Pressenwerkzeug eingespannt werden die Formbauteile durch die Kühlung gehärtet. Solche Formbauteile zeichnen sich durch ihre hohen Festigkeitswerte aus. Insbesondere bei Formbauteilen aus Mangan-Bor-Stahlblechen lassen sich Festigkeiten über 1.000 MPa, insbesondere im Bereich von 1.300 MPa bis 2.000 MPa, durch Form- bzw. Presshärten erreichen. Häufig werden beim Presshärten Stahlbleche mit einer metallischen AISi-Beschichtung eingesetzt. Eine solche metallische AlSi-Beschichtung schützt die Stahlbleche vor einer Verzunderung. Da die AISi-Beschichtung bei Temperaturen von ca. 600°C aufschmilzt, wird die Beschichtung jedoch durch den stetigen Kontakt auf die Oberfläche der Ofenrollen übertragen. Hierdurch bilden sich prozessstörende Aufbackungen. Des Weiteren kommt es zu einem Infiltrieren der Schmelze in das Gefüge der Ofenrollen, welches sich nachteilig auf die Standzeit der Ofenrollen auswirken kann. Die Aufbackungen an der Ofenrolle können aber auch zur ungleichmäßigen Erwärmung, Austenitisierung oder Durchlegierung der AlSi-Vorbeschichtung führen und zu unzulässig schwankenden Bauteileigenschaften.

Der Erfindung liegt ausgehend vom Stand der Technik die Aufgabe zugrunde, eine für den betrieblichen Einsatz, insbesondere in Rollenöfen von Warmformlinien für das Presshärten von beschichteten Stahlblechen, verbesserte Ofenrolle zu schaffen mit einer höheren Standzeit sowie die Gesamtanlageneffektivität eines Rollenherdofens und einer Warmformlinie mit einem solchen Rollenherdofen zu steigern.

Aus genannten nachteiligen Bauteileigenschaften ergibt sich auch die Aufgabe, ein Verfahren zum Presshärten von Kraftfahrzeugbauteilen zu verbessern.

Diese Aufgaben werden gelöst durch die unabhängigen Ansprüche.

Vorteilhafte Ausgestaltungen und Weiterbildungen der erfindungsgemäßen Lösung sind Gegenstand der abhängigen Ansprüche.

Eine Ofenrolle für einen Rollenherdofen weist einen hohlzylindrischen Rollenkörper aus einem keramischen Werkstoff auf. Der Rollenkörper ist mit einer äußeren Beschichtung versehen. Bei der Beschichtung handelt es sich um eine oxidische Tragflächenbeschichtung.

Erfindungsgemäß weist der Rollenkörper äußere in Längsrichtung des Rollenkörpers geradlinig verlaufende Längsrippen und dazwischen liegende geradlinig verlaufende Längsnuten auf.

Es hat sich überraschenderweise gezeigt, dass trotz der verringerten Tragfläche und dem daraus resultierenden eher linienartigen Kontakt mit der weichen bzw. schmelzflüssigen AlSi-Vorbeschichtung innerhalb der ersten Abschnitte des Rollenherdofens kein kritisches Eintauchen der Längsrippen in die Beschichtung stattfindet und die Adhäsion zwischen Längsrippen und Stahlblech sogar vorteilhaft verringert ist. Dieser Vorteil gilt umso stärker bei Verwendung der Ofenrolle im Presshärteverfahren, mithin bei einer Erwärmung und Durchlegierung im Rollenherdofen bei Ofentemperaturen zwischen 800 und 980°C. Denn auch wenn die Stahlblechtemperatur der Ofentemperatur zeitlich hinterher läuft, so wird doch schnell die Schmelztemperatur der AlSi-Vorbeschichtung überschritten und nur langsam infolge fortschreitender Diffusion von Al und Si in die Legierung des Stahlblechs auf ein Maß erhöht, was Anhaftungen weitere ausschließt.

Als weiterer Vorteil der erfindungsgemäßen Ausgestaltung der Ofenrolle mit den Längsrippen, insbesondere bei der Verwendung in einer Warmformlinie zum Presshärten von beschichteten Stahlblechen hat sich gezeigt, dass Aufbackungen nicht haften bleiben und im Betrieb einfach abfallen. Es tritt ein Selbstreinigungseffekt ein.

Die Längsrippen und Längsnuten erstrecken sich geradlinig über die gesamte Länge des Rollenkörpers. Des Weiteren können sich die Längsrippen und die Längsnuten auch nur über eine Teillänge des Rollenkörpers erstrecken. Die Längsrippen sind hierbei unterbrochen. Bevorzugt sind unterbrochene Längsrippen aber nur geringfügig, das heißt über einen geringen Längenanteil unterbrochen, insbesondere ist eine Summe der Längen aller Unterbrechungen nicht länger als dreißig Prozent der Länge der Ofenrolle.

Vorzugsweise besitzen die Längsrippen eine im Querschnitt am Außenumfang gerundete Stirnfläche und die Längsnuten einen gerundeten Nutgrund.

Die Stirnfläche besitzt einen Radius und jeder Nutgrund besitzt einen Radius, wobei der Radius der Stirnfläche größer bemessen ist als der Radius im Nutgrund.

Eine vorteilhafte Ausführungsform einer Ofenrolle sieht vor, dass die Längsrippen eine Rippenhöhe besitzen und der Rollenkörper eine zwischen dem Nutgrund und dem Innenumfang seines Innenraums gemessene Wandstärke besitzt, wobei das Verhältnis der Rippenhöhe zur Wandstärke des Rollenkörpers zwischen 1 : 1 und 1 : 2 bemessen ist. Die Rippenhöhe ist gemessen radial zwischen der Rippenwurzel bzw. dem Nutgrund und der äußeren Stirnfläche einer Rippe.

Eine weitere vorteilhafte Ausführungsform sieht vor, dass der Rollenkörper einen Mittellängenabschnitt und endseitige Endabschnitte aufweist, wobei der Mittellängenabschnitt einen Außendurchmesser besitzt, der größer ist als der Außendurchmesser der Endabschnitte.

Die Ofenrolle ist mit ihren endseitigen Endabschnitten jeweils durch eine äußere Seitenwand eines Rollenherdofens geführt. Ein erfindungsgemäßer Rollenherdofen weist eine Ofenkammer und die Ofenkammer begrenzende Seitenwände sowie eine erfindungsgemäße Ofenrolle auf. Insbesondere weist der Rollenherdofen eine aus einer Vielzahl von erfindungsgemäßen Ofenrollen gebildete Rollenbahn auf.

Eine erfindungsgemäße Rolle weist einen keramischen Rollenkörper auf. Dieser besteht vorzugsweise aus Oxidkeramik oder Karbidkeramik oder Nitridkeramik. Die keramischen Werkstoffe, aus denen der Rollenkörper hergestellt ist, sind insbesondere Mullitkeramiken aus der Klasse Al2O3-SiO2 oder Quarzgut, also Silika-Feuerfestmaterialien oder Silizium-Kohlenstoff (SiC). Ein bevorzugter keramischer Werkstoff für den Rollenkörper ist Mullit.

Der Rollenkörper ist ein Extrudat, also extrusionstechnisch hergestellt. Bei der extrusionstechnischen Herstellung erhält der Rollenkörper seine geometrische Ausgestaltung mit Längsrippen und Längsnuten. Die äußeren Oberflächen benötigen falls überhaupt nur eine geringe Nachbearbeitung, insbesondere schleiftechnischer Art. Eine Nachbearbeitung durch Schleifen kann an den Endabschnitten, also den endseitigen Längenabschnitten des Rollenkörpers, erfolgen.

Die äußere Oberfläche des Rollenkörpers, insbesondere die Tragflächen, sind mit einer Beschichtung versehen. Insbesondere handelt es sich um eine oxidische Beschichtung. Die Beschichtung auf Basis von Oxid verringert die Benetzbarkeit der Rollen gegenüber Metallschmelzen, also insbesondere einen Beschichtungswerkstoff wie einer Aluminium-Silizium-Legierung. Die Tragflächenbeschichtung der Ofenrolle fungiert als dichte Schutzschicht für den keramischen Rollenkörper. Die äußere Oberfläche bzw. Umfangsfläche des Rollenkörpers ist durch die Beschichtung versiegelt und damit glatt und wenig porös. Oberflächenunebenheiten und Porosität des Rollenkörpers werden durch die Beschichtung ausgefüllt und ausgeglichen.

Bevorzugt enthält die Beschichtung des Rollenkörpers ein Oxid ausgewählt aus der Gruppe Aluminiumoxid (Al₂O₃), Zirkonium(IV)-oxid (ZrO₂), Chrom(III)-oxid (Cr₂O₃), Yttriumoxid (Y₂O₃), Siliziumdioxid (SiO₂), Calziumoxid (CaO), Magnesiumoxid (MgO), Kaliumoxid (K₂O), Titan(IV)-oxid (TiO₂) und/oder Eisen(II)-oxid (FeO), vorzugsweise in einem Anteil von mindestens 50 Gew.-% (Gewichtsprozent). Des Weiteren kann die Beschichtung Bornitrid (BN) enthalten oder aus Bornitrid (BN) bestehen.

Eine vorteilhafte Ausgestaltung sieht vor, dass die äußere keramische Beschichtung des Rollenkörpers sich über den Mittellängenabschnitt des Rollenkörpers erstreckt. Der Mittellängenabschnitt bildet die Arbeitsbreite der Ofenrolle. Die Endabschnitte des Rollenkörpers sind unbeschichtet.

Ein wesentlicher und vorteilhafter Aspekt besteht in der Kombination einer verringerten Tragfläche, an welcher die Ofenrolle mit einem zu transportierenden Blech in Kontakt gelangt sowie der chemischen Barriere zwischen Ofenrolle und der Aluminium-Silizium-Beschichtung der zu transportierenden Platinen. Die chemische Barriere ergibt sich aus dem synergistischen Zusammenwirken der Zusammensetzung des Rollenkörpers und der Beschichtung. Eine Minimierung bzw. Verringerung der am Außenumfang wirksamen Tragfläche der Ofenrollen wird durch die Formgebung mit den Längsrippen und den dazwischen liegenden Längsnuten erreicht.

Die äußere Beschichtung des Rollenkörpers kann als thermische Spritzschicht ausgeführt sein. Möglich ist es auch, die Beschichtung aus einer auf dem Rollenkörper aufgetragenen und anschließend verfestigten, insbesondere eingebrannten, Suspension zu bilden.

Die Erfindung sieht des Weiteren die Verwendung einer Ofenrolle in einem Rollenherdofen in einer Warmformlinie zum Warmumformen und Presshärten von Stahlblechen, insbesondere von AlSi-beschichteten Blechen vor.

Die Ofenrolle weist einen hohlzylindrischen Rollenkörper auf mit einem Innenraum, der beidseitig in einem zum Rollenende gerichteten endseitigen Längenabschnitt durch einen inneren Stopfen aus Geopolymer verschlossen ist. Vorzugsweise wird der Innenraum des Rollenkörpers links und rechts durch einen Stopfen begrenzt, wobei der Stopfen jeweils von der Stirnseite des Rollenkörpers in einem Abstand angeordnet ist. Dies ermöglicht eine vorteilhafte Isolierung der Ofenrollen im Bereich des Übergangs zwischen der Ofenkammer und der durch die Seitenwand des Ofens begrenzten Außenumgebung. Die Stopfen isolieren den Innenraum des Rollenkörpers und dichten diesen ab, wobei die Stopfen gasdurchlässig sind. Aufgrund der Gasdurchlässigkeit der Stopfen kann ein Druckausgleich erfolgen. Vorzugsweise ist das Geopolymer, aus dem die Stopfen bestehen, ein alkalisch aktiviertes Alumosilikat, auch Aluminosilikat genannt.

Durch die im Bereich der endseitigen Längenabschnitte vorgesehenen Stopfen aus Geopolymer folgt eine innere Isolierung im Bereich des Übergangs zwischen der Ofenkammer und der durch die Seitenwand des Ofens getrennten Außenumgebung. Hierdurch wird die Übertragung bzw. Abfuhr von Wärme aus dem Ofeninnenraum und insbesondere aus dem Innenraum der Ofenrolle reduziert. Die Ofenrolle weist verbesserte Isoliereigenschaften und einen deutlich gesteigerte Temperaturwechselbeständigkeit auf und kann prozessbedingte Temperaturänderungen gut kompensieren. Rollenbrüche können verringert werden. Infolgedessen werden die Standzeiten der Ofenrollen und damit die Anlagenverfügbarkeit verbessert und die Betriebskosten reduziert. Wärmeverluste werden verringert und die Energieintensität des Ofenbetriebs verringert. Die Stopfen in den endseitigen Längenabschnitten des Rollenkörpers tragen zu einer wesentlichen betriebstechnischen Verbesserung der Ofenrolle bei, insbesondere was die thermische und mechanische Belastbarkeit anbelangt. Die Nutzungsdauer der Ofenrollen wird weiter erhöht. Zusätzlich wird die Anlageneffektivität verbessert, da die den Innenraum begrenzenden Stopfen in den endseitigen Längenabschnitten des Rollenkörpers den Bereich der Lagerung der Ofenrollen thermisch isolieren und abschirmen und so schützen.

Ein bevorzugtes Geopolymer besteht aus einem Aluminosilikat aktiviert durch Alkali, SiO2 und Al2O3 mit einem herstellungsbedingten Rest.

Die Erfindung betrifft des Weiteren ein Verfahren zur Herstellung eines warmgeformten und wenigstens abschnittsweise pressgehärteten Fahrzeugbauteils mit folgenden Schritten:
- Bereitstellung eines Al-Si-vorbeschichteten Stahlblechs aus einer härtbaren Stahllegierung,
- Erwärmen des Stahlblechs und Durchlegieren der AlSi-Vorbeschichtung mit der Stahllegierung in einem Rollenherdofen,
   wobei beim Erwärmen und Durchlegieren wenigstens eine erfindungsgemäße Ofenrolle und/oder ein erfindungsgemäß ausgestalteter Rollenherdofen verwendet wird,
   wobei das Erwärmen und Durchlegieren bei einer Ofentemperatur zwischen 800°C und 980°C erfolgt,
- Transfer des erwärmten Stahlblechs in ein wenigstens abschnittsweise gekühltes Presswerkzeug und
- Warmumformen und Presshärten des Stahlblechs in dem Presswerkzeug zum Fahrzeugbauteil.

Abhängig von der tatsächlichen Austenitisierungstemperatur der verwendeten Stahllegierung wird die Ofentemperatur im zuvor genannten Intervall eingestellt und damit auch die Temperatur des Stahlblechs.

Das Erwärmen und Durchlegieren des mit einer Aluminium-Silizium-Beschichtung versehenen Stahlblechs erfolgt in einem erfindungsgemäß ausgestalteten Rollenherdofen, welcher wenigstens in den ersten, zur Austenitisierung und Durchlegierung des Stahlblechs bestimmten Ofenzonen mit erfindungsgemäßen Ofenrollen bestückt ist.

Als besonders vorteilhaft hat sich gezeigt, dass es zu keinen Verschiebungen, Vibrationen oder Rotationen bzw. Unwuchten infolge von Aufbackungen beim Stahlblechtransport durch den Rollenherdofen kommt. Somit wirkt sich die erfindungsgemäße Ausgestaltung vorteilhaft auf die Positionstreue bei der Entnahme und den Transfer der erwärmten Stahlbleche zum Presswerkzeug aus.

Optional kann ein Zwischenkühlen und/oder ein Nacherwärmen zur Erzeugung eines bereichsweise unterschiedlich temperierten Stahlblechs erfolgen, so dass ein nur bereichsweise gehärtetes Kraftfahrzeugbauteil hergestellt wird.

Das erfindungsgemäße Verfahren ermöglicht die Herstellung von hochfesten Kraftfahrzeugbauteilen mit einer qualitativ hochwertigen Beschichtung.

Die Erfindung ist nachfolgend anhand von Zeichnungen ergänzend beschrieben. Es zeigen:
- Figur 1: eine perspektivische Ansicht einer Ofenrolle;
- Figur 2: die Ofenrolle in einer Seitenansicht und
- Figur 3: eine Stirnansicht auf die Ofenrolle.

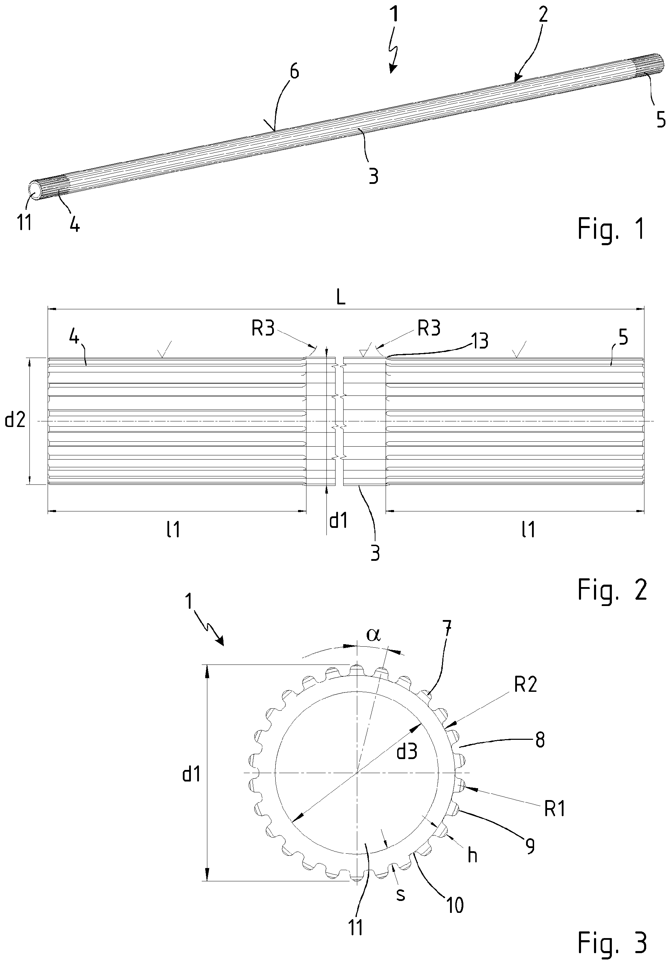

Anhand der Figuren 1, 2 und 3 ist eine erfindungsgemäße Ofenrolle 1 für einen Rollenherdofen erläutert.

Die Ofenrolle 1 weist einen hohlzylindrischen Rollenkörper 2 aus einem keramischen Werkstoff auf. Insbesondere besteht der Rollenkörper 2 aus Mullit. Der Rollenkörper 2 weist einen Mittellängenabschnitt 3 und jeweils endseitig einen Endabschnitt 4, 5 auf. Der Mittellängenabschnitt 3 des Rollenkörpers 2 ist mit einer äußeren Beschichtung 6 versehen. Die Beschichtung 6 umfasst einen oxidischen Werkstoff. Die Beschichtung 6 kann auch aus einer Mischung von Zirkonoxid, Aluminiumoxid, Bornitrid und/oder Silikat bestehen. Die äußere Beschichtung 6 ist im Mittellängenabschnitt 3 aufgebracht. Insbesondere ist die Beschichtung 6 als thermische Spritzschicht ausgeführt. Die Beschichtung 6 kann auch durch eine aufgetragene und eingebrannte Suspension gebildet sein.

Der Rollenkörper 2 weist äußere in Längsrichtung des Rollenkörpers 2 geradlinig verlaufende Längsrippen 7 und Längsnuten 8 auf. Im dargestellten Ausführungsbeispiel erstrecken sich die Längsrippen 7 und die dazwischen ausgebildeten Längsnuten 8 geradlinig über die gesamte Länge L des Rollenkörpers 2. Möglich ist es auch, dass die Längsrippen 7 im Verlauf der Länge L des Rollenkörpers 2 unterbrochen sind.

Die Längsrippen 7 und die dazwischen verlaufenden Längsnuten 8 sind auf dem Außenumfang des Rollenkörpers 2 auf einem Teilkreis gleichmäßig verteilt. Die Längsrippen 7 sind auf dem Umfang des Rollenkörpers 2 auf einem Teilkreis jeweils in einem Winkel α versetzt angeordnet.

Die Längsrippen 7 besitzen eine gerundete äußere Stirnfläche 9. Die Längsnuten 8 besitzen einen gerundeten Nutgrund 10. Die Stirnfläche 9 einer Längsrippe 7 weist einen Radius R1 auf. Der Nutgrund 10 einer Längsnut 8 weist einen Radius R2 auf. Der Radius R1 der Stirnfläche 9 ist größer bemessen als der Radius R2 im Nutgrund 10.

Der Rollenkörper 2 ist hohlzylindrisch und weist einen Innenraum 11 auf. Im Inneren der Endabschnitte 4, 5 ist jeweils ein in den Zeichnungen nicht dargestellter Stopfen aus einem Geopolymer angeordnet.

Der Rollenkörper 2 besteht aus einem keramischen Werkstoff und ist ein Extrudat. Die Endabschnitte 4, 5 sind am Außenumfang schleiftechnisch bearbeitet. Der Mittellängenabschnitt 3 weist einen Außendurchmesser d1 auf. In den Endabschnitten 4, 5 weist der Rollenkörper 2 einen Außendurchmesser d2 auf. Die Endabschnitte 4, 5 sind schleiftechnisch bearbeitet und im Durchmesser reduziert, so dass der Außendurchmesser d1 im Mittellängenabschnitt 3 größer ist als der Außendurchmesser d2 in den Endabschnitten 4, 5. Die Endabschnitte 4, 5 besitzen eine Länge l1, die wesentlich kürzer ist als die gesamte Länge L des Rollenkörpers 2. Folglich ist der Mittellängenabschnitt 3 um ein Vielfaches länger als ein Endabschnitt 4, 5. Der Mittellängenabschnitt 3 geht jeweils über einen gerundeten Übergang 12 mit einem Radius R3 in einen endseitigen Endabschnitt 4, 5 über.

Die Längsrippen 7 besitzen eine Rippenhöhe h. Die Rippenhöhe h ist gemessen vom Nutgrund 10 bis zum äußeren Punkt einer Stirnfläche 9. Des Weiteren weist der Rollenkörper 2 eine zwischen dem Nutgrund 10 und dem Innenumfang d3 seines Innenraums 11 gemessene Wandstärke s auf. Das Verhältnis der Rippenhöhe h zur Wandstärke s des Rollenkörpers 2 ist zwischen 1 : 1 und 1 : 2, insbesondere zwischen 1 : 1,25 und 1 : 1,75 bemessen.

Die äußere Tragfläche der Ofenrolle 1 ist durch die Ausgestaltung der Längsrippen 7 mit den dazwischen liegenden Längsnuten 8 reduziert. Demzufolge ist die Kontaktfläche zwischen der Ofenrolle 1 und einem zu transportierenden Blech verringert. Des Weiteren ist eine chemische Barriere zwischen der Ofenrolle 1 und dem zu transportierenden Blech ausgebildet, die durch die äußere Beschichtung 6 des Rollenkörpers 2 realisiert ist.

Insbesondere kommen erfindungsgemäße Ofenrollen 1 in Rollenöfen zur Anwendung. Besonders vorteilhaft sind die Ofenrollen 1 geeignet für Rollenöfen in Warmformlinien zum Presshärten von beschichteten Stahlblechen, und zwar insbesondere zum Presshärten von Aluminium-Silizium-(AISi-)beschichteten Stahlblechen.

### Bezugszeichen:

- 1 -: Ofenrolle
- 2 -: Rollenkörper
- 3 -: Mittellängenabschnitt
- 4 -: Endabschnitt
- 5 -: Endabschnitt
- 6 -: Beschichtung
- 7 -: Längsrippe
- 8 -: Längsnut
- 9 -: Stirnfläche
- 10 -: Nutgrund
- 11 -: Innenraum v. 2
- 12 -: Übergang

- α -: Winkel
- d1 -: Außendurchmesser v. 3
- d2 -: Außendurchmesser v. 4, 5
- d3 -: Innenumfang v. 11
- h -: Rippenhöhe
- L -: Länge v. 2
- l1 -: Länge v. 4, 5
- R1 -: Radius v. 9
- R2 -: Radius v. 10
- R3 -: Radius v. 12
- s -: Wandstärke

## Patentansprüche

1. Ofenrolle für einen Rollenherdofen, welche einen keramischen hohlzylindrischen Rollenkörper (2) aufweist und der Rollenkörper (2) mit einer äußeren Beschichtung (6) versehen ist, **dadurch gekennzeichnet, dass** der Rollenkörper (2) äußere in Längsrichtung des Rollenkörpers (2) geradlinig verlaufende Längsrippen (7) und Längsnuten (8) aufweist.

2. Ofenrolle nach Anspruch 1, **dadurch gekennzeichnet, dass** die Längsrippen (7) eine gerundete Stirnfläche (9) und die Längsnuten (8) einen gerundeten Nutgrund (10) besitzen.

3. Ofenrolle nach Anspruch 2, **dadurch gekennzeichnet, dass** die Stirnfläche (9) einen Radius (R1) besitzt und der Nutgrund (10) einen Radius (R2) besitzt, wobei der Radius (R1) der Stirnfläche (9) größer bemessen ist als der Radius (R2) im Nutgrund (10).

4. Ofenrolle nach einem der Ansprüche 1 bis 3, **dadurch gekennzeichnet, dass** die Längsrippen (7) eine Rippenhöhe (h) besitzen und der Rollenkörper (2) eine zwischen dem Nutgrund (10) und dem Innenumfang (d3) seines Innenraums (11) gemessenen Wandstärke (s) besitzt, wobei das Verhältnis der Rippenhöhe (h) zur Wandstärke (s) des Rollenkörpers (2) zwischen 1 : 1 und 1 : 2 bemessen ist.

5. Ofenrolle nach einem der Ansprüche 1 bis 4, **dadurch gekennzeichnet, dass** der Rollenkörper (2) einen Mittellängenabschnitt (3) und endseitige Endabschnitte (4, 5) aufweist, wobei der Mittellängenabschnitt (3) einen Außendurchmesser (d1) besitzt, der größer ist als der Außendurchmesser (d2) der Endabschnitte (4, 5).

6. Ofenrolle nach einem der Ansprüche 1 bis 5, **dadurch gekennzeichnet, dass** der Rollenkörper (2) ein Extrudat ist.

7. Ofenrolle nach einem der Ansprüche 1 bis 6, **dadurch gekennzeichnet, dass** die Beschichtung (6) zumindest ein Oxid, ausgewählt aus der Gruppe Aluminiumoxid (Al₂O₃), Zirkonium(IV)-oxid (ZrO₂), Chrom(III)-oxid (Cr₂O₃), Yttriumoxid (Y₂O₃), Siliziumdioxid (SiO₂), Calziumoxid (CaO), Magnesiumoxid (MgO), Kaliumoxid (K₂O), Titan(IV)-oxid (TiO₂) und/oder Eisen(II)-oxid (FeO) oder Bornitrid (BN) enthält.

8. Ofenrolle nach einem der Ansprüche 1 bis 7, **dadurch gekennzeichnet, dass** der Rollenkörper (2) einen Innenraum (11) und Endabschnitte (4, 5) aufweist, wobei in jedem Endabschnitt (4, 5) ein Stopfen aus einem Geopolymer angeordnet ist.

9. Rollenherdofen mit einer Ofenrolle (1) nach einem der Ansprüche 1 bis 8.

10. Verwendung einer Ofenrolle (1) nach einem der Ansprüche 1 bis 8 in einem Rollenherdofen einer Warmformlinie zum Presshärten von beschichteten Stahlblechen, insbesondere von AlSi-beschichteten Stahlblechen.

11. Verfahren zur Herstellung eines warmgeformten und wenigstens abschnittsweise pressgehärteten Fahrzeugbauteils mit den Schritten:
- Bereitstellung eines Al-Si-vorbeschichteten Stahlblechs aus einer härtbaren Stahllegierung,
- Erwärmen des Stahlblechs und Durchlegieren der AlSi-Vorbeschichtung mit der Stahllegierung in einem Rollenherdofen,
wobei beim Erwärmen und Durchlegieren wenigstens eine Ofenrolle nach einem der Ansprüche 1 bis 8 und/oder ein Rollenherdofen nach Anspruch 9 verwendet wird,
wobei das Erwärmen und Durchlegieren bei einer Ofentemperatur zwischen 800°C und 980°C erfolgt,
- Transfer des erwärmten Stahlblechs in ein wenigstens abschnittsweise gekühltes Presswerkzeug und
- Warmumformen und Presshärten des Stahlblechs in dem Presswerkzeug zum Fahrzeugbauteil.
